Europäisches Patentamt

European Patent Office

Office européen des brevets

(19)

(11) Numéro de publication: **0 250 309 B1**

(12) **FASCICULE DE BREVET EUROPEEN**

(45) Date de publication du fascicule du brevet: **08.08.90**

(51) Int. Cl.⁵: **G07F 7/10, H04L 9/00**

(21) Numéro de dépôt: **87401340.2**

(22) Date de dépôt: **15.06.87**

(54) Procédé pour faire authentifier par un milieu extérieur un objet portatif tel qu'une carte à mémoire accouplée à ce milieu.

(30) Priorité: **16.06.86 FR 8608654**

(43) Date de publication de la demande:
**23.12.87 Bulletin 87/52**

(45) Mention de la délivrance du brevet:
**08.08.90 Bulletin 90/32**

(84) Etats contractants désignés:
**AT BE CH DE ES FR GB IT LI LU NL SE**

(56) Documents cités:
**EP-A- 0 005 179**
**EP-A- 0 028 965**
**EP-A- 0 161 181**
**US-A- 3 798 605**

(73) Titulaire: **BULL CP8, Rue Eugène Hénaff BP 45,
F-78190 Trappes(FR)**

(72) Inventeur: **Hazard, Michel, 27, rue des Harias,
F-78124 Mareil/Mauldre(FR)**

(74) Mandataire: **Debay, Yves et al, BULL S.A. Industrial
Property Department P.C.:
HQ 8M006 B.P. 193.16 121 avenue de Malakoff,
F-75764 Paris Cédex 16(FR)**

ACTORUM AG

## Description

L'invention a pour objet un procédé pour faire authentifier par un milieu extérieur un objet portatif tel qu'une carte à mémoire accouplée à ce milieu.

L'invention s'applique notamment dans le cas où le milieu extérieur a pour fonction de délivrer un service ou d'autoriser l'accès à un système par l'intermédiaire d'une carte, mais sachant que seules certaines cartes sont habilitées à coopérer avec ce milieu extérieur, il faut que le milieu extérieur s'assure au préalable que la carte qui lui a été accouplée a bien été conçue à l'origine pour donner droit à la délivrance de ce service ou à cette autorisation d'accès.

D'une façon générale, la plupart des applications qui mettent en oeuvre des objets portatifs tels que des cartes prennent en compte au moins une clé secrète spécifique de chaque application. Cette clé est préenregistrée d'une part dans toutes les cartes qui peuvent avoir accès à cette application et d'autre part dans tous les appareils auxquels peuvent être connectées ces cartes pour obtenir la délivrance d'un service ou l'autorisation d'accès dans le cadre de cette application. Ces clés secrètes sont seules connues des organismes habilités qui délivrent les cartes et qui gèrent les appareils qui coopèrent avec ces cartes. Dans chacune de ces applications, l'appareil doit préalablement vérifier que la carte possède bien la même clé secrète que la sienne sans pour autant divulguer de quelque façon que ce soit la valeur de cette clé.

Cette vérification s'effectue généralement par un échange d'informations entre la carte et l'appareil sous la forme d'un dialogue tel que décrit par exemple dans le brevet français n° 2 469 760 de la demanderesse.

Selon ce brevet, le dialogue consiste à entrer depuis l'extérieur un nombre aléatoire dans la carte, à faire calculer par les circuits de traitement de la carte un résultat qui est au moins fonction de ce nombre aléatoire et d'une clé secrète préenregistrée dans la carte, à extraire ce résultat de la carte et à le comparer avec un résultat calculé par l'appareil et qui est au moins fonction de ce même nombre aléatoire et d'une clé secrète préenregistrée dans l'appareil.

Cette vérification ou authentification de la carte est satisfaite s'il y a concordance entre ces deux résultats. Bien entendu, cette concordance ne peut être obtenue que si les clés secrètes sont identiques.

Pour interdire à tout fraudeur de fabriquer de fausses cartes, il est impératif de garder le caractère secret des clés utilisées, notamment au niveau des appareils qui sont accessibles au public. Généralement, les clés sont enregistrées dans une zone de mémoire qui est ensuite vérrouillée pour en interdire l'accès depuis l'extérieur, cette zone n'étant accessible qu'en interne par les circuits de traitement reliés à cette mémoire. Il faut cependant admettre qu'une fraude, bien que limitée et techniquement délicate, est toujours possible et qu'un fraudeur cherchera à percer le secret par des techniques évoluées comme par exemple une lecture laser de la mémoire contenant les clés.

Pour pallier cet inconvénient, l'invention ne prévoit plus la présence d'une clé secrète au niveau de l'appareil et remplace cette clé par une information variable dans le temps, tout en permettant à cet appareil d'authentifier les cartes qui peuvent coopérer avec lui.

L'invention propose donc un procédé pour faire authentifier par un milieu extérieur un objet portatif accouplé à ce milieu, du type consistant à faire calculer par des circuits de traitement de l'objet portatif un résultat qui est au moins fonction d'une clé secrète préenregistrée dans une mémoire de l'objet portatif et d'une donnée variable externe fournie par le milieu extérieur, caractérisé en ce qu'il consiste à analyser la similitude de ce résultat avec au moins un résultat antérieur calculé par un objet portatif précédemment accouplé avec le milieu extérieur, ce résultat antérieur ayant été calculé à partir de la même donnée variable.

Selon une variante, la donnée variable utilisée est modifiée d'une façon aléatoire à partir d'un objet portatif qui vient d'être authentifié par le milieu extérieur.

Selon un avantage important de l'invention, tout appareil représentatif du milieu extérieur est parfaitement banalisé, c'est-à-dire qu'il ne renferme aucune information confidentielle ou secrète.

D'autres caractéristiques, avantages et détails ressortiront de la description explicative qui va suivre faite en référence aux dessins annexés donnés à titre d'exemple et dans lesquels :

- la figure 1 illustre schématiquement un système qui met en oeuvre le procédé conforme à l'invention suivant un premier mode de réalisation,
- et la figure 2 illustre schématiquement un système pour la mise en oeuvre du procédé conforme à l'invention suivant un second mode de réalisation.

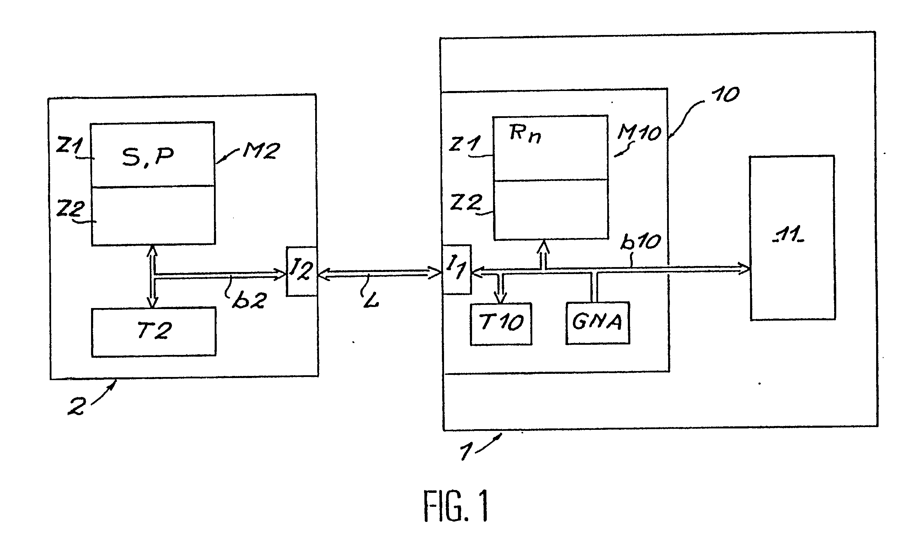

Le système représenté à la figure 1 est constitué d'un milieu extérieur schématisé par un appareil ou terminal (1) et d'un objet portatif (2) qui est temporairement accouplé à l'appareil (1) dans le but de permettre au porteur de l'objet d'obtenir par exemple la délivrance d'un service ou l'autorisation d'accès à un autre système (non représenté).

L'appareil (1) se compose d'un dispositif de contrôle (10) et d'un ensemble de circuits (11) spécifiques de l'appareil en fonction de l'application envisagée.

Le dispositif de contrôle (10) se compose d'une mémoire (M 10), de circuits de traitement (T10) et d'un générateur de nombres aléatoires (GNA) reliés ensemble et aux circuits (11) par un bus (b10) de commande, de donnée et d'adresse. La mémoire (M10) est au moins divisée en deux zones de mémoire (Z1, Z2). La zone de mémoire (Z1) contient des données qui, une fois écrites, ne sont accessibles que par les circuits de traitement (T10), alors que la zone de mémoire (Z2) contient des informations qui sont accessibles en lecture depuis l'extérieur et en lecture/ecriture par les circuits de traitement (T10).

L'objet portatif (2) tel qu'une carte à mémoire comprend une mémoire (M2), par exemple du type programmable, et des circuits de traitement (T2) tels qu'un microprocesseur qui sont reliés ensemble par l'intermédiaire d'un bus (b2) de commande, de donnée et d'adresse. La mémoire (M2) de la carte est également partagée en au moins deux zones (Z1, Z2) dont les conditions d'accès sont identiques à celles de la mémoire (M10) de l'appareil (1). Une telle carte est notamment décrite dans les brevets français n° 2 401 459 et 2 461 301 de la demanderesse.

L'accouplement entre la carte (2) et l'appareil (1) s'effectue au moyen d'une interface (I1) côté appareil et d'une interface (I2) côté carte, ces deux interfaces étant reliées entre elles, en local ou à distance, par une liaison (L). Un tel dispositif d'accouplement est notamment décrit dans le brevet français n° 2 483 713 de la demanderesse.

La zone de mémoire (Z1) de la mémoire (M2) de la carte contient une clé secrète (S) qui est spécifique du ou des services qui peuvent être obtenus à partir de la carte (2).

Aucune clé secrète (S) n'est enregistrée dans les appareils (1) qui sont destinés à coopérer avec les cartes (2) possédant la clé secrète (S).

En référence au mode de réalisation représenté à la figure 1, il va être décrit la façon dont l'appareil (1) peut néanmoins authentifier une carte (2) possédant une clé secrète (S) et qui est accouplée à l'appareil (1).

L'appareil (1) transmet un nombre aléatoire (E) à la carte (2). Les circuits de traitement (T2) de la carte (2) exécutent un programme (P) préenregistré dans la zone de mémoire (Z1). Ce programme (P) prend au moins en compte le nombre aléatoire (E) et la clé secrète (S) pour aboutir au calcul d'un résultat (R) tel que :

$$R = f (E, S)$$

Ce résultat (R) ainsi calculé est ensuite transmis au dispositif de contrôle (10) de l'appareil (1) qui va analyser ce résultat afin d'authentifier la validité de la carte (2).

Pour cela, supposons que $n$ cartes (2) aient déjà été accouplées à l'appareil (1). Ces $n$ cartes auront respectivement calculé $n$ résultats antérieurs (Ra) qui auront été successivement enregistrés dans la zone de mémoire (Z1) du dispositif de contrôle (10). Nous supposerons également que ces $n$ résultats ont tous été calculés à partir du même nombre aléatoire (E) qui, une fois tiré par le générateur (GNA) est enregistré dans la zone de mémoire (22) de la mémoire (M10) du dispositif de contrôle (10).

L'opération d'authentification de la carte (2) va consister à comparer le résultat (R) avec les (Ra) résultats antérieurs. En pratique quatre cas peuvent se présenter.

Dans les deux premiers cas, il est supposé que tous les résultats antérieurs (Ra) sont identiques, c'est-à-dire qu'ils ont tous été calculés par des cartes ayant une même clé secrète (S) et à partir d'un même nombre aléatoire (E).

Selon le premier cas, le résultat (R) est identique à chacun des résultats (Ra). Le dispositif de contrôle (10) considère alors la carte (2) comme authentique, enregistre le résultat (R) qui devient un résultat antérieur (Ra) et autorise l'appareil (1) à délivrer le service en validant le fonctionnement de l'ensemble des circuits (11).

Selon le deuxième cas, le résultat (R) est différent de chacun des résultats (Ra). Le dispositif de contrôle (10) considère alors la carte (2) comme une fausse carte et inhibe le fonctionnement des circuits (11).

Dans les troisième et quatrième cas, il est supposé que les résultats antérieurs (Ra) ne sont pas tous identiques, c'est-à-dire qu'ils ont été calculés à partir de clés secrètes (S) différentes.

Dans les différents cas examinés précédemment, il est indiqué que les différents résultats (R) calculés par les cartes (2) sont enregistrés dans la mémoire (M10) du dispositif de contrôle. Pour gagner de la place mémoire, il est avantageux de ne pas enregistrer plusieurs résultats identiques, mais d'enregistrer une première fois un résultat (R) différent d'un autre et d'utiliser des compteurs qui sont incrémentés à chaque fois qu'un nouveau résultat (R) est identique à un résultat déjà enregistré.

Il est prudent d'effectuer un contrôle supplémentaire sur chaque carte utilisateur (2) pour éviter qu'une même carte, notamment une fausse carte, soit accouplée $n$ fois successives pour faire croire à l'appareil (1) que les (Ra) résultats identiques antérieurs calculés par la carte (2) sont authentiques et proviennent de $n$ bonnes cartes différentes. Ce contrôle peut consister à faire enregistrer par l'appareil (1) une donnée propre au support telle que le numéro de série de la carte afin de contrôler le nombre de fois où une même carte est accouplée à l'appareil.

Ce fonctionnement ainsi décrit laisse supposer que les premières cartes (2) qui seront accouplées à l'appareil (1), notamment la première, sera automatiquement rejetée ou acceptée puisque le dispositif de contrôle (10) n'aura pas encore enregistré un résultat antérieur (Ra) ou peu de résultats (Ra) pour décider de la validité d'une carte.

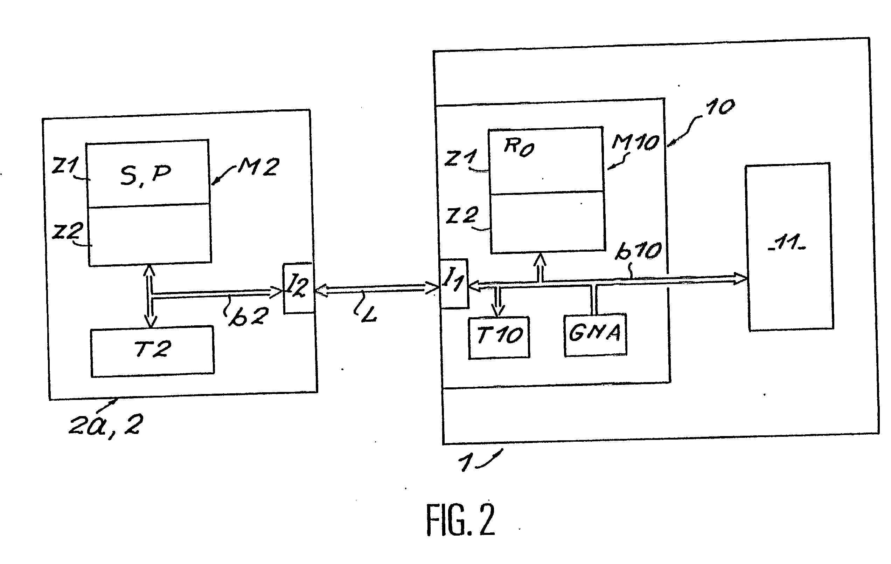

Ce problème est résolu par le second mode de réalisation représenté à la figure 2. A la mise en service de l'appareil (1), un résultat de référence (R0) est calculé par une carte témoin (2a) mise à la disposition de l'organisme habilité qui gère les appareils (1). Par définition, cette carte (2a) possède la même clé secrète (S) que toutes les cartes (2) délivrées par cet organisme et donnant accès aux appareils (1).

La carte (2a) de la figure 2 est du même type que la carte (2) de la figure 1. Une personne habilitée accouple la carte (2a) à l'appareil (1) dont le générateur (GNA) tire un nombre aléatoire (E) qui est transmis à la carte (2a). Les circuits de traitement (T2) de la carte (2a) calculent un résultat de référence (R0) de la même manière que le calcul d'un résultat (R). Ce résultat (R0) est enregistré dans la zone de mémoire (Z1) de la mémoire (M10) du dispositif de contrôle (10). Ensuite, chaque résultat (R) calculé par une carte (2) sera comparé uniquement à ce résultat de référence (R0). Dans ce cas, il n'est pas nécessaire d'enregistrer dans la mémoire (M10) du dispositif de contrôle les résultats calculés par les différentes cartes (2).

Selon une variante de l'invention, le nombre aléatoire (E) est changé par mesure de sécurité. Ce changement n'intervient pas de façon régulière dans le temps, mais par exemple au bout de n cartes accouplées à l'appareil, ce nombre n étant lui-même variable. Le changement du nombre aléatoire (E) implique le calcul d'un nouveau résultat de référence (R0). Pour ce calcul, il peut être envisagé de prendre la carte témoin (2a) utilisée précédemment pour l'initialisation. Cette solution n'est pas satisfaisante car elle implique à chaque changement le déplacement d'une personne habilitée en possession de cette carte (2a) auprès de chaque appareil (1).

Avantageusement, une variante de l'invention prévoit tout simplement le calcul du nouveau résultat de référence (R0) par une carte utilisateur (2) qui vient d'être déclarée authentique sur la base du résultat de référence (R0) précédent. On évite ainsi l'utilisation d'une carte témoin (2a).

Plus précisément, à la nième carte (2) déclarée authentique (n étant variable), le générateur (GNA) de l'appareil (1) tire un nouveau nombre aléatoire (E) qui est transmis à la carte (2) dont le microprocesseur (T2) calcule le nouveau résultat de référence (R0) qui est ensuite enregistré dans la mémoire (M10) de l'appareil (1) ainsi que le nombre aléatoire (E) qui vient d'être tiré.

L'appareil (1) suivant le principe de l'invention permet d'authentifier des cartes (2) par l'intermédiaire des clés secrètes (S) enregistrées dans ces cartes sans connaître ni recalculer la valeur de ces clés, mais seules pourront être authentifiées des cartes ayant une même clé secrète (S). Il est également possible à l'appareil (1) de pouvoir gérer plusieurs résultats associés à plusieurs clés secrètes (S) différentes et ainsi authentifier plusieurs familles de cartes, chaque famille ayant une clé secrète déterminée identifiable par l'appareil (1).

## Revendications

1. Procédé pour faire authentifier par un milieu extérieur (1) un objet portatif (2) accouplé à ce milieu, du type consistant à faire calculer par des circuits de traitement (T2) de l'objet portatif (2) un résultat (R) qui est au moins fonction d'une clé secrète (S) préenregistrée dans une mémoire (M2) de l'objet portatif (2) et d'une donnée variable (E) externe fournie par le milieu extérieur (1), caractérisé en ce qu'il consiste à analyser la similitude de ce résultat (R) avec au moins un résultat antérieur (Ra) calculé par un objet portatif (2) précédemment accouplé au milieu extérieur (1), ce résultat antérieur ayant été calculé à partir de la même donnée variable (E).

2. Procédé selon la revendication 1, caractérisé en ce qu'il consiste à calculer un résultat de référence (R0) à partir de la donnée variable (E), à enregistrer ce résultat (R0) dans une mémoire (M10) du milieu extérieur (1), chaque résultat (R) calculé par un objet portatif (2) devant être égal à ce résultat de référence (R0).

3. Procédé selon la revendication 2, caractérisé en ce qu'il consiste à faire calculer ce résultat (R0) par un objet portatif témoin (2a) détenu par une personne habilitée.

4. Procédé selon la revendication 1 ou 2, caractérisé en ce qu'il consiste à changer la donnée variable (E) après l'accouplement de n objets portatifs, n étant lui-même variable.

5. Procédé selon la revendication 4, caractérisé en ce qu'il consiste à faire calculer un nouveau résultat de référence (R0), à partir de la nouvelle donnée variable (E) fournie par le milieu extérieur, par un objet portatif (2) qui vient d'être authentifié sur la base d'un résultat de référence précédent.

6. Procédé selon l'une des revendications précédentes, caractérisé en ce qu'il consiste à obtenir la donnée variable (E) à partir d'un générateur de nombres aléatoires (GNA) du milieu extérieur (1).

## Patentansprüche

1. Verfahren, um von einer außenliegenden Stelle (1) einen mit dieser Stelle gekuppelten tragbaren Gegenstand (2) gültig zu erklären, wobei das Verfahren darin besteht, von den Verarbeitungsschaltkreisen (T2) des tragbaren Gegenstands (2) ein Resultat (R) errechnen zu lassen, das wenigstens die Funktion eines in einem Speicher (M2) des tragbaren Gegenstandes (2) voreingespeicherten geheimen Schlüssels (S) und einer von der externen Stelle (1) gelieferten variablen externen Information (E) ist, dadurch gekennzeichnet, daß es darin besteht, die Ähnlichkeit dieses Resultates (R) mit zumindest einem früheren Resultat (Ra) zu vergleichen das von einem tragbaren vorher an die außenliegende Stelle (1) gekuppelten Gegenstand (2) errechnet wurde, wobei dieses frühere Resultat von der gleichen Informationsvariablen, (E) ausgehend berechnet worden war.

2. Verfahren nach Anspruch 1, dadurch gekennzeichnet, daß es darin besteht, ein Referenzresultat (R0) ausgehend von der variablen Information (E) zu berechnen und dieses Resultat (R0) in einen Speicher (M10) der außenliegenden Stelle (1) einzuspeichern, wobei jedes Resultat (R), das von einem tragbaren Gegenstand (2) berechnet worden war, gleich mit diesem Referenzresultat (R0) sein muß.

3. Verfahren nach Anspruch 2, dadurch gekennzeichnet, daß es darin besteht, dieses Resultat (R0) durch einen tragbaren Gegenstand (2a) als Zeugen errechnen zu lassen, der im Besitz einer berechtigten Person ist.

4. Verfahren nach Anspruch 1 oder 2, dadurch gekennzeichnet, daß es darin besteht, die variable Information (E) nach dem Anschließen von n tragbaren Gegenständen zu wechseln, wobei n selbst eine Variable ist.

5. Verfahren nach Anspruch 4, dadurch gekennzeichnet, daß es darin besteht ausgehend von der neuen variablen Information (E), die von der außenliegenden Stelle stammt, durch einen tragbaren Gegenstand (2), der auf Basis eines vorhergehenden Referenzresultates für gültig erklärt wird, ein neues Referenzresultat (R0) zu berechnen.

6. Verfahren nach einem der vorhergehenden Ansprüche, dadurch gekennzeichnet, daß es darin besteht, die variable Information (E) von einem Zufallszahlengenerator (GNA) der außenliegenden Stelle (1) zu erhalten.

## Claims

1. Method for authenticating by an external medium (1) a portable object (2) coupled with this medium, of the type consisting of arranging the calculation by processing circuits (T2) of the portable object (2) of a result (R) which is at least a function of a secret key (S) prerecorded in a memory (M2) of the portable object (2) and of a variable piece of external data (E) supplied by the external medium (1), characterized in that it consists of analysing the similarity of this result (R) with at least one previous result (Ra) calculated by a portable object (2) previously coupled with the external medium (1), this previous result having been calculated from the same variable piece of data (E).

2. Method according to claim 1, characterized in that it consists of calculating a reference result (R0) from the variable piece of data (E), of recording this result (R0) in a memory (M10) of the external medium (1), wherein each result (R) calculated by a portable object (2) must be equal to this reference result (R0).

3. Method according to claim 2, characterized in that it consists of arranging for this result (R0) to be calculated by a reference portable object (2a) held by an entitled person.

4. Method according to claim 1 or 2, characterized in that it consists of changing the variable piece of data (E) after the coupling of $\underline{n}$ portable objects, $\underline{n}$ being itself variable.

5. Method according to claim 4, characterized in that it consists of arranging for the calculation of a new reference result (R0) from the new variable piece of data (E) supplied by the external medium, by a portable object (2) which has just been authenticated on the basis of a preceding reference result.

6. Method according to one of the preceding claims, characterized in that it consists of obtaining the variable data (E) from a generator of random numbers (GNA) of the external medium (1).

FIG. 1

EP 0 250 309 B1

FIG.2

EP 0 250 309 B1